# FASCICULE DE BREVET EUROPEEN

(11) **EP 2 203 781 B1**
(45) Date de publication et mention de la délivrance du brevet: **04.04.2018**
(21) Numéro de dépôt: 08844372.6
(22) Date de dépôt: 31.10.2008
(51) Int. Cl.: G02F 1/1335, G02F 1/1333

(54) **ECRAN A CRISTAL LIQUIDE**
FLÜSSIGKRISTALLBILDSCHIRM
LIQUID CRYSTAL SCREEN

(30) Priorité: 31.10.2007 FR 0707675
(43) Date de publication de la demande: 07.07.2010
(73) Titulaire: Thomson Licensing, 92130 Issy-les-Moulineaux (FR)
(72) Inventeur: KRETZ, Thierry, F-38430 Saint Jean de Moirans (FR); MEUNIER, Bernard, F-38590 Saint Etienne de Saint Geoirs (FR)
(74) Mandataire: Esselin, Sophie
(86) Numéro de dépôt international: PCT/EP2008/064778
(87) Numéro de publication internationale: WO 2009/056621

(56) Documents cités:
- EP-A- 1 519 219
- WO-A-02/16083
- DE-A1- 2 544 940
- FR-A- 2 798 478
- JP-A- 55 093 127
- JP-A- 55 138 715
- JP-A- 2004 157 471
- US-A- 4 508 428

## Description

La présente invention concerne un écran à cristal liquide et plus particulièrement la structure arrière de cet écran permettant une encapsulation améliorée.

Les producteurs d'écrans LCD fournissent ces écrans à des utilisateurs qui vont les intégrer dans un produit final, tel qu'une planche de bord ou un dispositif portable par exemple. Les écrans sont fournis encapsulés dans une structure mécanique rigide formant un cadre.

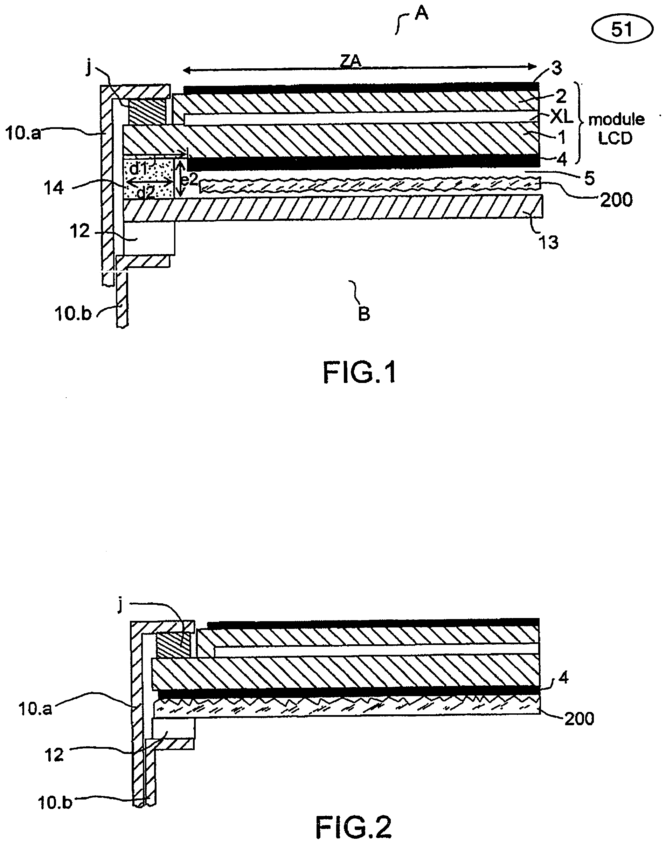

La figure 1 illustre un exemple d'encapsulation arrière d'un écran LCD. L'exemple représenté correspond à une configuration de base comprenant un cadre 10 enserrant une cellule LCD, c'est à dire une plaque 1 et une contreplaque 2 assemblées de manière étanche pour former une cavité contenant le cristal liquide XL, entre les deux plaques, et deux polariseurs assemblés (ou plus exactement laminés), chacun par collage : un polariseur avant 3 laminé sur la contreplaque 2 et un polariseur arrière 4 laminé sur la plaque 1.

La plaque 1 est plus grande que la contreplaque 2, offrant ainsi une zone périphérique 1a en débord de la contreplaque. Cette zone périphérique est prise en étau entre un cadre extérieur 10.a et un cadre intérieur 10.b qui forment la structure mécanique 10 d'encapsulation de l'écran. En face avant A, on trouve habituellement un joint j entre le cadre extérieur et la face avant de la plaque 1, dans la zone périphérique 1a. En face arrière B c'est habituellement une entretoise 12 qui est utilisée entre le cadre intérieur 10.b et le plan arrière de la cellule. La demande de brevet internationale WO 02/16083 montre une autre structure mécanique dans laquelle le module est pincé par l'intermédiaire de deux joints élastiques.

Lorsque l'on utilise un polariseur arrière 4 du type non durci au stockage en chaleur humide, l'assemblage polariseur sur plaque est sensible à l'humidité. Pour ces raisons, on prévoit une structure d'encapsulation arrière configurée pour étanchéifier cet assemblage sur tout le tour de la cellule. Cette structure d'encapsulation comprend ainsi, outre le cadre intérieur 10.b et l'entretoise 12, une lame transparente sensiblement de même dimension que la plaque, typiquement une lame de verre 13, combinée à un cadre adhésif double face 14 placé entre la plaque 1 et cette lame de verre 13 : la plaque, la lame et le cadre adhésif forment une cavité étanche dans laquelle le polariseur est enfermé : dans ces conditions, le polariseur arrière 4 est en retrait d'une largeur d1 du bord de la plaque 13 et de la lame de verre 13, c'est à dire que sa surface est sensiblement plus petite que celle de la plaque et de la lame.

Le cadre adhésif utilisé est de type VHB ("*Very High Bonding*") c'est à dire fortement adhésif. Il est disposé en bord de plaque et/ou lame, et a une largeur d2 inférieure au retrait d1. Il a une épaisseur e2 qui assure un espacement de quelques centaines de micromètres entre la lame de verre 13 et le polariseur 4. Cet espacement est nécessaire pour éviter des contacts entre les deux plans 4 et 13 en regard, contacts qui auraient pour effets optiques indésirables, la formation de franges d'interférence. L'entretoise 12 est pincée entre le cadre intérieur 10.b et la face arrière de la lame de verre 13. Elle a sensiblement la même largeur que le cadre adhésif.

Selon la destination du produit et les qualités optiques recherchées, il peut être nécessaire d'intégrer des fonctions optiques supplémentaires à l'arrière, telle que par exemple une fonction diffuseur, ou amplificateur de flux optique, ou prépolariseur... Ceci peut se faire facilement dans la configuration décrite, en insérant en face arrière du polariseur; d'autres films optiques supplémentaires, dans l'espace 5 entre la lame de verre 13 et le polariseur 4. Par exemple, un diffuseur 200 est illustré sur la figure 1. Ce diffuseur est intégré de façon flottante,-c'est à dire qu'il n'est pas collé à l'un ou l'autre plan du polariseur 4 ou lame 13 ; il "frotte" dans le gap d'air entre le polariseur 4 et la lame de verre 13. Le diffuseur peut également être laminé sur la lame arrière de manière à éviter son flottement dans la cavité et donc son gondolement en environnement thermique.

La demande JP 55 093 127 montre un autre exemple d'empilement optique en face arrière d'un polariseur.

Une telle encapsulation arrière présente les conditions mécaniques, optiques et d'étanchéité nécessaires. Notamment, l'étanchéité est assurée par le cadre adhésif VHB : le terme "cadre" signifiant que l'adhésif est continu sur tout le pourtour de la cellule.

Cependant, elle présente différents inconvénients :
- le cadre VHB a un coût élevé de fabrication : en effet, le cadre est réalisé par enlèvement de la matière centrale dans une feuille de matériau adhésif : toute cette partie centrale est perdue.
- le cadre VHB utilise le bord périphérique 1a de la plaque 1, en dehors de la zone optique active Z de la cellule. La largeur e2 du cadre VHB dépend de la largeur de cette zone. Cette caractéristique empêche d'utiliser certaines cellules LCD bon marché du commerce dans lesquelles la plaque et la contreplaque sont découpées à ras de la zone active sur deux côtés au moins. Ceci est une limitation gênante car on cherche de plus en plus même dans des applications contraignantes de type avionique, à utiliser les composants du commerce dits COTS, pour réduire les coûts. Dans d'autres cellules, la zone périphérique est très étroite, trop étroite pour réaliser un cadre VHB de largeur suffisante pour garantir l'étanchéité. Typiquement en dessous de trois millimètres environ, un cadre VHB n'est pas étanche. A cette difficulté se rajoutent celles de réaliser et de manipuler un cadre VHB trop fin.
- le gap d'air dans l'espace 5 entre le polariseur 4 et la lame de verre 13 entraîne une forte sensibilité de l'écran LCD aux variations de pression atmosphérique. Cette sensibilité est d'autant plus grande que la distance entre les deux plans 4 et 13 est grande. Cette sensibilité à la variation de pression est très gênante pour des écrans LCD dédiés aux applications avioniques, avec des risques soit d'ouverture lors de fortes variations de pression, soit de collage d'interfaces lisses (calle arrière avec polariseur ou DBEF, diffuseur avec cale arrière,...)
- selon les conditions de stockage de l'écran, un film optique tel que 200, placé à l'arrière de la cellule dans l'espace 5 entre les deux plans 4 et 12, peut gondoler. Des gondolements se traduisent sur le plan optique, par des non-uniformités du rétro-éclairage LCD et donc à une qualité d'image dégradée.
- la réparation, par exemple pour remplacer le film gondolé, nécessite le démontage de la structure mécanique.

Pour ces différentes raisons, on utilise de préférence un polariseur arrière 4 du type durci au stockage en chaleur humide, ce qui permet de s'affranchir des problèmes d'étanchéité à l'interface plaque arrière/polariseur, et donc de la structure mécanique lame de verre plus cadre adhésif de la figure 1 : le polariseur 4 durci peut être réalisé sur toute l'étendue de la plaque 1, comme illustré sur la figure 2. L'ensemble plaque et polariseur peut alors être directement pincé entre le cadre extérieur 10.a et le cadre intérieur 10.b, via le joint j en face avant et l'entretoise 12 en face arrière, puisqu'il n'y a pas de problème d'étanchéité à l'interface plaque 1 et polariseur arrière 4. L'entretoise 12 peut directement venir s'appuyer contre la face arrière du polariseur 4.

Selon la destination du produit et les qualités optiques recherchées, ou pour parfaire les propriétés optiques de l'écran, il peut être nécessaire d'intégrer des fonctions optiques supplémentaires en face arrière, telle que par exemple une fonction diffusante ou amplificateur de flux optique. Dans la configuration de la figure 2, l'intégration d'un film optique 200 se fait en plaquant le film contre le polariseur arrière 4. Cependant, comme le polariseur présente une surface arrière lisse, ceci ne peut se faire qu'en utilisant un film optique présentant une rugosité de surface non nulle, comme enseigné dans le brevet US 4 508 428. La rugosité nécessaire est obtenue par traitement approprié de la surface, par toute technique connue, et par exemple, dans le cas d'un diffuseur en PMMA (PolyMethyl MethAcrylate, thermoplastique du type plexiglas) : moulage de la pièce dans un moule structuré, embossage, gravure chimique ou physique,....Sinon, si le film optique présente également une surface lisse, l'assemblage introduirait des défauts cosmétiques de type interférence ou anneaux de Newton.

L'empilement polariseur 4/diffuseur 200 simplifie l'encapsulation du module LCD dans la structure mécanique 10, puisque l'ensemble peut être pris en étau, via le joint et l'entretoise, entre le cadre extérieur et le cadre intérieur sans élément mécanique supplémentaire, et sans cadre adhésif contrairement à l'encapsulation illustrée à la figure 1.

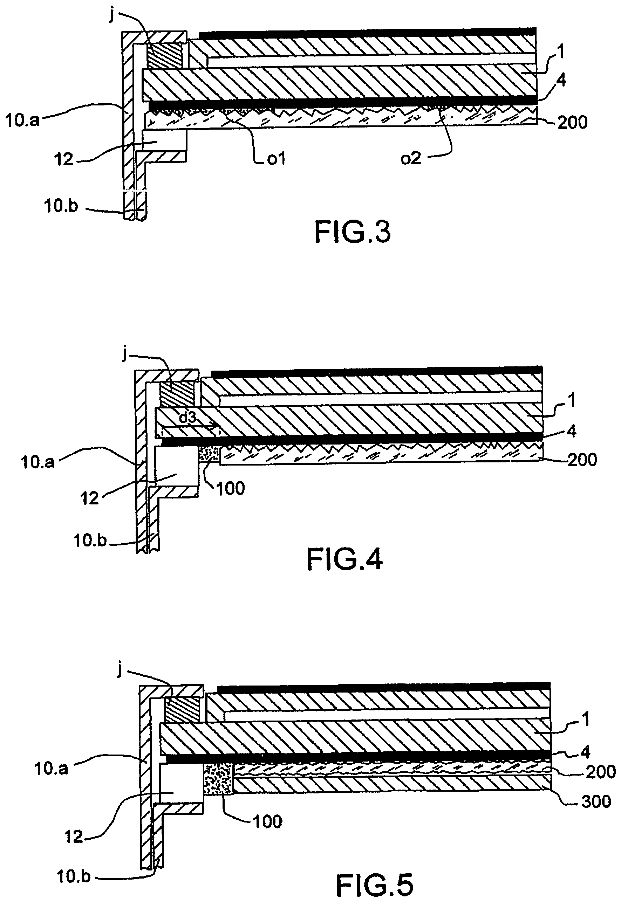

Cependant, on a pu observer en pratique que du liquide arrive à s'infiltrer par capillarité à l'interface des plans diffuseur 200 et polariseur 4, par la tranche de la cellule. Du liquide peut ainsi être piégé entre les deux plans des surfaces en contact du diffuseur et du polariseur, comme illustré sur la figure 3. Ce liquide piégé à différents endroits o1, o2 entraîne alors des défauts de non uniformité d'éclairement. Une fois piégé, le liquide ne peut pas s'évaporer facilement. Même si on sèche l'écran, il peut rester des traces d'eau séchée, et/ou des restes d'eau, qui auront les mêmes effets optiques inacceptables.

Plus généralement, comme on peut être intéressé à intégrer plusieurs films optiques à l'arrière, chacun assurant une fonctionnalité optique particulière, le problème de l'étanchéité de l'interface se pose à chaque fois.

Enfin le remplacement d'un film optique présentant un défaut, nécessite nécessairement le démontage de la structure mécanique, ce qui n'est pas souhaitable.

L'invention a pour objet un écran LCD avec une configuration du ou des films optiques en face arrière du polariseur qui facilite l'encapsulation dans une structure mécanique formant cadre avec les qualités recherchées.

L'invention a pour objet de résoudre un problème technique d'encapsulation, que l'on peut formuler comme suit : proposer une structure d'encapsulation arrière peu coûteuse, simple à mettre en oeuvre, résistante aux variations de pression atmosphérique et sans problèmes d'étanchéité pour un module LCD comprenant au moins un film optique à l'arrière du polariseur ; une structure qui puisse être utilisée quelles que soient les qualités de stockage en milieu humide du polariseur ; une structure qui soit évolutive, permettant l'intégration d'autres fonctionnalités optiques (DBEF, BEF, diffuseur holographique, diffuseur...) à l'arrière de la cellule tout en respectant toujours les conditions énumérées ci-dessus.

Telle que caractérisée, l'invention concerne un écran LCD comportant un module LCD monté dans une structure mécanique, ledit module étant pris en étau sur son pourtour entre un cadre intérieur et un cadre extérieur de ladite structure mécanique, le module LCD comprenant un polariseur en face arrière d'une plaque du module et un empilement optique en face arrière du polariseur comprenant au moins un film optique plaqué contre ledit polariseur, l'une au moins des faces dudit film et du polariseur plaquées l'une contre l'autre étant à rugosité de surface non nulle. Une entretoise est disposée à l'arrière du module, sur son pourtour, entre le module et le cadre intérieur de la structure mécanique, ladite entretoise ayant des cotes et une rigidité permettant une prise en étau sans porte à faux du module. L'empilement optique est en retrait de l'entretoise, délimitant un espace permettant une dispense d'un cordon de colle sur la tranche de l'empilement sur tout son pourtour dans l'espace délimité entre l'entretoise et l'empilement et ledit cordon de colle assurant l'étanchéité des interfaces lisse/rugueux entre le polariseur et le film optique et solidarisant l'empilement au module.

L'invention concerne également un procédé comprenant des étapes de montage correspondantes.

D'autres avantages et caractéristiques de l'invention sont détaillés dans la description suivante en référence aux dessins illustrés d'un mode de réalisation de l'invention, donné à titre d'exemple non limitatif. Dans ces dessins :
- la figure est une vue en coupe partielle d'un module à cristal liquide encapsulé dans un cadre, suivant un premier mode d'encapsulation arrière;
- la figure 2 est une vue en coupe partielle d'un module à cristal liquide encapsulé dans un cadre, présentant un deuxième mode d'encapsulation arrière;
- la figure 3 illustre le problème des infiltrations d'eau avec une encapsulation suivant la figure 2;
- la figure 4 illustre dans une vue en coupe partielle, un premier mode d'encapsulation arrière selon l'invention;
- la figure 5 illustre une généralisation de ce mode d'encapsulation, pour un module LCD comprenant un film optique arrière supplémentaire;
- la figure 6 illustre une première variante de ce mode d'encapsulation;
- la figure 7 illustre une deuxième variante de ce mode d'encapsulation; et
- les figures 8a et 8b sont des vues schématiques de la face arrière montrant deux variantes de réalisation de l'entretoise.

Dans la demande, on entend :
- par module LCD, l'ensemble formé de la cellule LCD et de ses polariseurs avant et arrière, et par plaque, la plaque de la cellule LCD contre laquelle est placé le polariseur arrière ;
- par polariseur arrière 4 un polariseur pur, c'est à dire un polariseur qui n'assure que sa fonction de polarisation, ou bien un polariseur combiné à une autre fonction optique, par exemple une fonction amplificateur de flux optique, anti-reflet ou de limitation des réflexions de la lumière ambiante, obtenu par laminage d'un film optique correspondant, en utilisant une colle d'indice adaptée, pour ne pas avoir de problème d'interférence optique (Anneaux de Newton et/ou franges d'interférence).
- par surface rugueuse d'un film, une surface rendue non lisse par tout moyen, par exemple par travail de la surface (gaufrage, emboutissage, moulage ...), ou par rajout de constituant, par exemple par mélange de billes, ou de fibres au matériau avant formation du film ...

L'invention propose de réaliser en face arrière du module LCD, un empilement compact d'un film ou de plusieurs films optiques contre la face arrière du polariseur arrière 4, l'empilement étant en retrait du bord de la plaque 1, et d'une entretoise 12 disposée en face arrière du module, sur son pourtour, et réalisé en sorte qu'une face lisse du polariseur ou d'un film optique de l'empilement est toujours plaquée contre une face rugueuse d'un autre film et un cordon de colle dispensé sur la tranche de l'empilement, sur tout son pourtour. On peut aussi avoir un polariseur avec une face rugueuse plaquée contre une face lisse d'un film optique.

Dans une variante l'empilement et le polariseur ont les mêmes dimensions et le cordon de colle couvre la tranche de l'empilement et du polariseur.

Ce cordon de colle assure plusieurs fonctions :
- une fonction mécanique d'assemblage permettant de solidariser l'empilement au module LCD,
- une fonction d'isolation/étanchéité vis à vis de l'extérieur de chaque interface : l'interface entre le polariseur et un film optique et l'interface entre deux films optiques successifs,
- une fonction mécanique d'amortissement des variations de pression permettant de rendre l'empilement et l'assemblage de l'empilement au module LCD insensibles aux variations de pression atmosphérique et notamment aux fortes décompressions subies par les écrans LCD en environnement avionique.

En pratique, la dispense de colle est réalisée de la manière suivante : l'empilement est plaqué mécaniquement contre la face lisse du polariseur 4 pendant toute l'opération de dispense et de polymérisation de la colle. De cette manière, le volume d'air emprisonné dans l'empilement et entre l'empilement et le polariseur est minimisé, ce qui contribue à obtenir un écran encapsulé insensible aux variations de pression atmosphérique ; l'épaisseur de colle est ajustée pour qu'elle isole chacune des interfaces dans l'empilement et entre l'empilement et le polariseur arrière de l'ambiance extérieure et étanchéifie donc toute la structure contre des infiltrations éventuelle ; et le cordon de colle permet de solidariser l'empilement au module. Si le polariseur du module LCD est non durci, le cordon de colle couvre aussi la tranche du polariseur et étanchéifie l'interface plaque 1/polariseur 4.

L'invention permet ainsi de réaliser un écran LCD avec un empilement en face arrière à la fois compact, sans gap d'air, résistant aux variations de pression atmosphérique, sans défauts optiques type anneau de Newton ou franges d'interférence, et étanche.

Selon que l'on utilise un polariseur durci ou non, l'encapsulation d'un tel écran est obtenue de manière simple dans le premier cas, en prenant la plaque 1 et le polariseur 4 en étau via un joint j en face avant et l'entretoise 12 en face arrière, entre le cadre extérieur 10.a et le cadre intérieur 10.b; dans le deuxième cas seule la plaque 1 est prise en étau entre les deux cadres via le joint j et l'entretoise 12.

L'invention va maintenant être illustrée à l'aide de plusieurs modes de réalisation.

La figure 4 illustre un premier mode de réalisation d'un écran LCD comportant un film optique diffuseur 200 à l'arrière du module LCD, applicable dans le cas où le polariseur 4 à l'arrière de la cellule LCD est du type durci au stockage en milieu humide.

Le polariseur 4 est dispensé sur sensiblement toute l'étendue de la plaque 1 de la cellule. Comme indiqué en liminaire, c'est un polariseur pur ou un polariseur combiné à une autre fonction optique par laminage d'un film optique, au moyen d'une colle d'indice adaptée (polariseur/DBEF par exemple). Ce type d'assemblage connu ne présente pas de problème d'étanchéité à l'interface ni à l'arrière du film, ni de problèmes d'interférences optiques.

L'entretoise 12 est plaquée contre le polariseur arrière 4, sur tout le pourtour du module.

Le diffuseur 200 est plaqué contre le polariseur arrière 4, mais en retrait du bord du polariseur, d'une distance d3, et en retrait de l'entretoise 12. Il présente une surface rugueuse qui est plaquée contre la surface lisse du polariseur : de cette façon, il ne peut y avoir génération d'anneaux de Newton ou de franges d'interférences.

Un cordon de colle 100 est dispensé surtout le tour du diffuseur, sur sa tranche, couvrant la jointure du diffuseur et du polariseur. Comme illustré sur la figure 4, il est dispensé dans l'espace délimité entre l'entretoise 12 et le diffuseur 200. L'entretoise sert ainsi de mur de délimitation pour la dispense du cordon de colle 100.

Ce cordon de colle assure plusieurs fonctions :
- une fonction mécanique d'assemblage permettant de solidariser le diffuseur 200 au reste du module,
- une fonction d'isolation de l'espace plan du diffuseur/ plan du polariseur de l'extérieur, assurant ainsi l'étanchéité de l'interface,
- une fonction mécanique d'amortissement des variations de pression permettant de rendre l'empilement collé module/polariseur/diffuseur insensible aux variations de pression et notamment aux fortes décompressions subies par les écrans LCD en environnement avionique.

L'écran est encapsulé en pinçant la plaque 1 et le polariseur 4 dans la structure mécanique 10.

La figure 5 illustre un deuxième mode de réalisation de l'invention, qui permet avantageusement d'intégrer un réchauffeur en face arrière, sans nuire aux qualités optiques de l'écran. L'empilement comprend dans l'exemple un film optique 200, par exemple un diffuseur, dont les deux faces sont rugueuses.

De manière plus détaillée, le film optique 200 est alors pris en sandwich entre deux plans lisses, celui du polariseur (ou du polariseur + un film DBEF laminé) et celui d'une dalle transparente. Cette dalle 300 peut alors avantageusement être équipée d'un réchauffeur, typiquement une résistance chauffante. La dalle sera par exemple en verre et plus généralement dans un matériau qui ne s'altère pas avec la température issue du réchauffeur 300.

Comme dans le mode de réalisation de la figure 4, l'ensemble comprenant l'empilement optique comprenant le diffuseur 200, et la dalle transparente 300, est réalisé en retrait du bord du polariseur, et de l'entretoise.

Le cordon de colle est dispensé comme indiqué précédemment, dans l'espace délimité entre l'entretoise et l'ensemble diffuseur 200 et dalle transparente 300, pour obtenir une épaisseur propre à couvrir les deux interfaces polariseur/film optique 200 et film optique 200 /dalle en verre 300.

Suivant cette réalisation, aucun liquide ne peut s'infiltrer, même lors d'un stockage en chaleur humide, entre les plans lisses et les plans rugueux de l'empilement polariseur 4/film 200/cale en verre 300.

Plus généralement, l'empilement optique peut comprendre plusieurs films optiques plaqués les uns contre les autres. La dalle de verre est alors plaquée contre le dernier film optique de l'empilement. La face arrière du dernier film de l'empilement optique contre laquelle la plaque de verre est plaquée est alors à rugosité de surface non nulle.

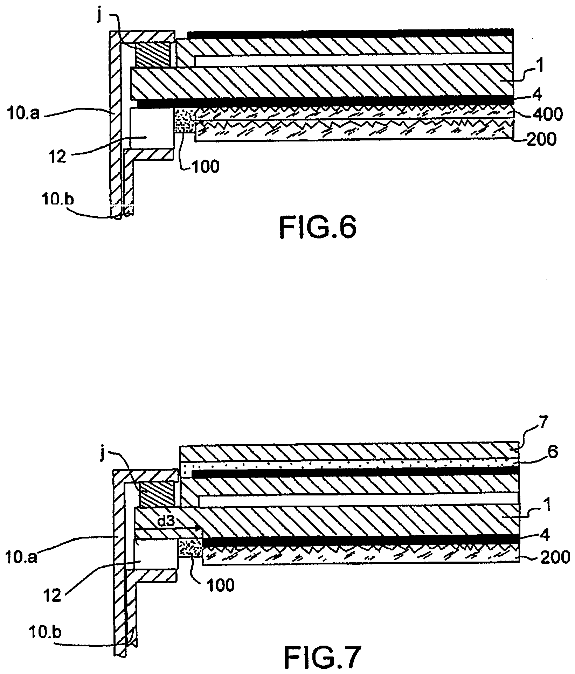

La figure 6 illustre un autre mode de réalisation d'un écran, avec un empilement arrière comprenant non plus un mais plusieurs films optiques, dans l'exemple un diffuseur 200 et un film amplificateur DBEF 400. Dans l'exemple le film DBEF est celui qui est placé tout contre le polariseur et le diffuseur est placé contre le film DBEF. Chaque film de l'empilement comprend au moins une face rugueuse, et l'empilement est réalisé en sorte qu'à chaque interface comportant une face lisse, celle-ci est nécessairement plaquée contre une face rugueuse en sorte que l'empilement ne peut entraîner d'anneau de Newton ni de franges d'interférence à aucune interface.

Le cordon de colle est dispensé comme précédemment sur sensiblement toute l'épaisseur de la tranche de l'empilement, pour couvrir toutes les interfaces.

Les modes de réalisation décrits en référence aux figures 4 à 6, s'appliquent dans le cas où le polariseur est du type durci au stockage en chaleur humide, en sorte qu'il épouse sensiblement toute la surface de la plaque 1 du module LCD, et qu'il est pris en étau avec cette plaque entre les deux cadres de la structure mécanique 10. Dans ces modes de réalisation, et comme illustré sur ces figures, l'entretoise 12 sur laquelle le cadre intérieur 10b de la structure mécanique 10 vient en appui, est plaquée contre le polariseur, l'empilement optique étant réalisé en retrait de cette entretoise.

Dans le cas où le polariseur 4 est sensible à l'environnement de stockage (chaleur humide), ce qui est notamment le cas des modules LCD du commerce (composants COTs), il faut disposer le polariseur 4 en retrait du bord de la plaque 1, et de l'entretoise 12 comme illustré sur la figure 7, pour assurer son étanchéité avec le cordon de colle. Dans ce cas, le cordon de colle 100 est dispensé selon l'invention, dans l'espace délimité entre l'entretoise et l'ensemble polariseur et empilement optique, et il couvre l'épaisseur de l'empilement et du polariseur. C'est ce qui est représenté à la figure 7. Cette figure détaille également une protection du polariseur 3 en face avant quand ce dernier n'est pas du type durci, par une lame transparente, par exemple en verre, assemblée au polariseur par de la colle 6 d'indice optique adaptée assurant la protection du polariseur avant. La configuration à l'arrière d'un module LCD réalisée selon l'invention est évolutive et permet facilement l'intégration de nombreuses fonctionnalités optiques (DBEF, BEF, diffuseur holographique,...) à l'arrière de la cellule tout en respectant les conditions énumérées ci-dessus : empilement de films optiques sur le polariseur avec un traitement des surfaces des films pour ne jamais avoir deux surfaces lisses plaquées l'une contre l'autre, et cordon de colle dispensé sur la largeur de tranche de l'empilement assurant l'adhésion de l'empilement au module, son étanchéité et la résistance de l'empilement aux variations de pression atmosphérique.

Cette configuration facilite en outre la réparation d'un film défaillant de l'empilement : il suffit d'enlever le joint, pour retirer l'empilement, remplacer le ou les films défaillants, voire le polariseur dans le cas où il n'est pas durci et reformer l'empilement et le plaquer contre le polariseur 4 pendant la dispense et la polymérisation de la colle, le tout sans toucher à la structure mécanique 10.

L'utilisation dans tous les modes de réalisation de l'invention d'une entretoise en face arrière du module sur son pourtour, avec l'empilement optique réalisé en retrait de l'entretoise, a plusieurs avantages.

Notamment les cotes et la rigidité d'une telle entretoise sont maîtrisées, offrant ainsi une surface lisse et plane d'appui, qui permet de prendre aisément le module LCD en étau entre deux pièces mécaniques 10a et 10b, sans risque de porte-à-faux, contrairement à un module sans entretoise, sur lequel l'empilement optique serait simplement encollé comme enseigné par exemple dans la demande JP 55 138715.

La disposition de l'empilement optique à l'intérieur de l'espace intérieur délimité par l'entretoise (avec un retrait typiquement d'au moins 0.5mm sur chaque côté entre l'empilement optique et l'intérieur de l'entretoise) permet :
- de délimiter la zone de collage pour réaliser l'étanchéification des interfaces optiques et le maintien mécanique de l'empilement optique : la colle est dispensée sur la tranche de l'empilement, dans l'espace entre l'entretoise et l'empilement.
- le re-travail aisé de l'empilement optique, tout en gardant le module LCD monté dans sa mécanique.

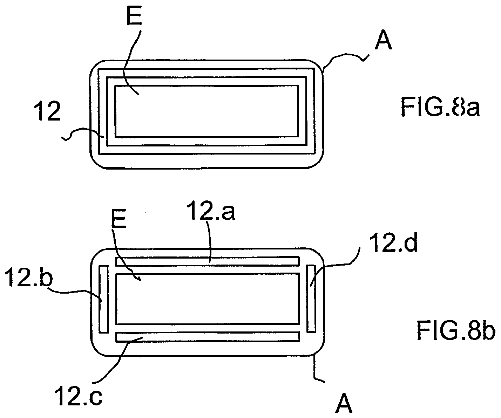

L'entretoise 12 peut être un cadre fermé faisant tout le tour de la face arrière A du module comme illustré sur la figure 8a, ou 4 bandes 12.a, 12.b, 12.c et 12.d disposées sur les 4 côtés de cette face arrière du module. Ces bandes d'entretoise ont la même fonction de mur d'arrêt pour la colle à dispenser sur la tranche de l'empilement optique E et de zones d'appui de dimensions et de rigidité contrôlées. Les bandes ne se touchant pas dans les coins, la colle peut aller au delà des bandes d'entretoise à seulement à ces endroits, ce qui n'est pas gênant. Une telle entretoise en bande est notamment bien adaptée à des écrans LCD à coins meulés, pour lesquels une entretoise continue est plus difficile à réaliser.

Dans une autre variante de réalisation, l'entretoise, continue ou en bandes, est réalisée par le cadre mécanique intérieur 10.b de la structure mécanique 10. Ce cadre peut-être par exemple une pièce moulée en plastique. Si on prend par les profils des figures 4 à 6, cela revient à supprimer le trait de séparation entre le cadre intérieur 10.b et l'entretoise 12, pour former une seule et même pièce.

Dans une variante de réalisation, l'entretoise est mécaniquement solidaire du module, typiquement au moyen d'un adhésif placé entre l'entretoise et l'arrière du module (sur la plaque 1 ou sur le polariseur arrière 4 selon le mode de réalisation). Dans le processus de fabrication, on prévoit alors une étape de dispense de colle sur le pourtour du module, pour coller l'entretoise ou les bandes d'entretoise, ou encore le cadre mécanique intérieur réalisant d'une même pièce l'entretoise.

Il est alors possible de livrer un écran LCD sous cette forme avec entretoise solidaire, à charge du destinataire du produit de monter lui-même le module dans une structure mécanique finale.

## Revendications

1. Ecran LCD comportant un module LCD monté dans une structure mécanique (10),
ledit module étant pris en étau sur son pourtour entre un cadre intérieur 10(b) et un cadre extérieur (10a) de ladite structure mécanique, le module LCD comprenant un polariseur(4) en face arrière d'une plaque (1) du module et un empilement optique en face arrière du polariseur (4) comprenant au moins un film optique (200) plaqué contre ledit polariseur, l'une au moins des faces dudit film et du polariseur plaquées l'une contre l'autre étant à rugosité de surface non nulle, **caractérisé en ce qu'**il comprend une entretoise (12), disposée à l'arrière du module, sur son pourtour, entre le module et le cadre intérieur de la structure mécanique, ladite entretoise ayant des cotes et une rigidité permettant une prise en étau sans porte à faux du module et **en ce que** l'empilement optique (4) est en retrait de l'entretoise (12), délimitant entre l'entretoise et l'empilement optique un espace dans lequel est disposé un cordon de colle (100) sur la tranche de l'empilement sur tout son pourtour, ledit cordon de colle assurant l'étanchéité des interfaces lisse/rugueux entre le polariseur et le film optique et solidarisant l'empilement au module.

2. Ecran LCD selon la revendication 1, dans lequel ledit empilement comprend deux ou plusieurs films optiques plaqués les uns contre les autres, tel qu'à chaque interface entre deux films optiques (200, 300), l'un au moins a une face à rugosité de surface non nulle, et le cordon a une épaisseur suffisante pour assurer couvrir les différentes interfaces sur la tranche de l'empilement.

3. Ecran LCD selon la revendication 1 ou 2, dans lequel au moins un film optique de l'empilement est un diffuseur.

4. Ecran LCD selon l'une quelconque des revendications 1 à 3, dans lequel ledit polariseur (4) est un polariseur à fonction optique supplémentaire intégrée par laminage d'un film optique.

5. Ecran LCD selon l'une quelconque des revendications 1 à 4, dans lequel le polariseur (4) et l'empilement optique ont sensiblement les mêmes dimensions, en retrait par rapport au bord du module et de l'entretoise qui est disposée contre la face arrière de la plaque (1) du module, et ledit cordon de colle (100) couvre la tranche de l'ensemble du polariseur et de l'empilement optique, dans l'espace délimité entre l'entretoise (12) et l'ensemble polariseur et empilement optique.

6. Ecran LCD selon l'une quelconque des revendications 1 à 4, dans lequel le polariseur est du type durci au stockage en chaleur humide, et recouvre sensiblement la surface de la plaque (1) du module, et l'entretoise (12) est disposée contre la face arrière dudit polariseur.

7. Ecran LCD selon l'une quelconque des revendications précédentes, comprenant en outre une dalle de verre intégrant un réchauffeur de surface, ladite dalle étant plaquée contre le film ou le dernier film de l'empilement optique, la face du film optique plaquée contre la dalle de verre étant à rugosité de surface non nulle.

8. Ecran LCD selon l'une quelconque des revendications 1 à 7, dans lequel l'entretoise (12) est une pièce continue faisant le tour du module.

9. Ecran LCD selon l'une quelconque des revendications 1 à 7, dans lequel l'entretoise (12) est formée de quatre bandes, une par côté du module.

10. Ecran LCD selon l'une quelconque des revendications 1 à 9, dans lequel l'entretoise et ledit cadre intérieur (10.b) sont une même pièce.

11. Ecran LCD selon l'une quelconque des revendications 1 à 9, dans lequel ledit cadre intérieur prend appui sur l'entretoise (12).

12. Ecran LCD selon l'une quelconque des revendications précédentes, dans lequel l'entretoise (12) est attachée solidairement au dit module, par un adhésif.

13. Procédé d'assemblage d'un écran LCD, comprenant la formation d'un module LCD comprenant un polariseur (4) en face arrière d'une plaque (1) et le montage du module dans une structure mécanique (10), le module étant pris en étau sur son pourtour entre un cadre extérieur (10a) et un cadre intérieur 10(b) de la structure mécanique, **caractérisé en ce qu'**il comprend la formation d'une entretoise (10) ayant des cotes et une rigidité permettant une prise en étau sans porte à faux du module entre lesdits cadre intérieur et cadre extérieur, l'entretoise étant disposée à l'arrière du module, sur son pourtour, entre le module et le cadre intérieur, et le montage en face arrière du polariseur (4) d'un empilement optique (200) comprenant au moins un film optique, l'une au moins des faces dudit film et du polariseur plaquées l'une contre l'autre étant à rugosité de surface non nulle, avec l'empilement optique en retrait de l'entretoise (12) délimitant un espace permettant une dispense d'un cordon de colle (100) sur la tranche de l'empilement sur tout son pourtour, ledit cordon de colle assurant l'étanchéité des interfaces lisse/rugueux entre le polariseur et le film optique et solidarisant l'empilement au module.

## Patentansprüche

1. Flüssigkristallbildschirm mit einem in einer mechanischen Struktur (10) montierten Flüssigkristallmodul,
wobei das Modul auf seinem Umfang zwischen einem inneren Rahmen (10b) und einem äußeren Rahmen (10a) der mechanischen Struktur eingeklemmt ist, wobei das Flüssigkristallmodul auf der Rückseite einer Platte (1) des Moduls einen Polarisator (4) und auf der Rückseite des Polarisators (4) einen optischen Stapel mit mindestens einem an dem Polarisator anliegenden optischen Film (200) umfasst, wobei mindestens eine der aneinander anliegenden Flächen des Films und des Polarisators eine Oberflächenrauheit aufweist, die nicht gleich Null ist, **dadurch gekennzeichnet, dass** er einen Steg (12) umfasst, der hinter dem Modul auf dessen Umfang zwischen dem Modul und dem inneren Rahmen der mechanischen Struktur angeordnet ist, wobei der Steg Abmessungen und eine Steifigkeit aufweist, die ein Einklemmen des Modules ohne Überkragung ermöglichen, und dass der optische Stapel (4) in Bezug auf den Steg (12) zurückgesetzt ist, wodurch zwischen Steg und optischem Stapel ein Raum begrenzt wird, in dem ein Klebstoffstrang (100) auf der Kante des Stapels auf dessen gesamtem Umfang angeordnet ist, wobei der Klebstoffstrang die Abdichtung der Glatt-Rau-Schnittstellen zwischen dem Polarisator und dem optischen Film sicherstellt und den Stapel mit dem Modul fest verbindet.

2. Flüssigkristallbildschirm nach Anspruch 1, bei dem der Stapel zwei oder mehrere optische Filme umfasst, die aneinander anliegen, so dass an jeder Schnittstelle zwischen zwei optischen Filmen (200, 300) mindestens einer eine Fläche mit einer Oberflächenrauheit aufweist, die nicht gleich Null ist, und der Strang eine Dicke aufweist, die ausreichend ist, um die Abdeckung der unterschiedlichen Schnittstellen auf der Kante des Stapels abzudecken sicherzustellen.

3. Flüssigkristallbildschirm nach Anspruch 1 oder 2, bei dem mindestens ein optischer Film des Stapels ein Diffusor ist.

4. Flüssigkristallbildschirm nach einem beliebigen der Ansprüche 1 bis 3, bei dem der Polarisator (4) ein Polarisator mit zusätzlicher durch Laminierung eines optischen Films integrierter optischer Funktion ist.

5. Flüssigkristallbildschirm nach einem beliebigen der Ansprüche 1 bis 4, bei dem der Polarisator (4) und der optische Stapel im Wesentlichen dieselben Abmessungen aufweisen, in Bezug auf den Rand des Moduls und des gegen die Rückseite der Modulplatte (1) angeordneten Stegs zurückgesetzt sind und der Klebstoffstrang (100) die Kante der Anordnung aus Polarisator und optischem Stapel in dem zwischen dem Steg (12) und der Anordnung aus Polarisator und optischem Stapel begrenzten Raum abdeckt.

6. Flüssigkristallbildschirm nach einem beliebigen der Ansprüche 1 bis 4, bei dem der Polarisator vom der Art ist, die bei Lagerung bei feuchter Wärme härtet, und im Wesentlichen die Oberfläche der Modulplatte (1) abdeckt und der Steg (12) gegen die Rückseite des Polarisators angeordnet ist.

7. Flüssigkristallbildschirm nach einem beliebigen der vorhergehenden Ansprüche, umfassend ferner eine Glasplatte mit einem Oberflächenerhitzer, wobei die Glasplatte an dem Film oder an dem letzten Film des optischen Stapels anliegt, wobei die an der Glasplatte anliegende Fläche des optischen Films eine Oberflächenrauheit aufweist, die nicht gleich Null ist.

8. Flüssigkristallbildschirm nach einem beliebigen der Ansprüche 1 bis 7, bei dem der Steg (12) ein zusammenhängendes Stück ist, das das Modul umgibt.

9. Flüssigkristallbildschirm nach einem beliebigen der Ansprüche 1 bis 7, bei dem der Steg (12) durch vier Streifen - je einen pro Modulseite - gebildet ist.

10. Flüssigkristallbildschirm nach einem beliebigen der Ansprüche 1 bis 9, bei dem der Steg und der innere Rahmen (10b) ein und dasselbe Stück sind.

11. Flüssigkristallbildschirm nach einem beliebigen der Ansprüche 1 bis 9, bei dem der innere Rahmen sich auf dem Steg (12) abstützt.

12. Flüssigkristallbildschirm nach einem beliebigen der vorhergehenden Ansprüche, bei dem der Steg (12) mit dem Modul mittels eines Klebstoffs fest verbunden ist.

13. Verfahren zum Zusammensetzen eines Flüssigkristallbildschirms, umfassend die Bildung eines Flüssigkristallmoduls mit einem Polarisator (4) an der Rückseite einer Platte (1) und das Montieren des Moduls in einer mechanischen Struktur (10), wobei das Modul auf seinem Umfang zwischen einem äußeren Rahmen (10a) und einem inneren Rahmen (10b) eingeklemmt ist, **dadurch gekennzeichnet, dass** es die Bildung eines Stegs (10) mit Abmessungen und einer Steifigkeit umfasst, die ein Einklemmen des Modules ohne Überkragung zwischen dem inneren Rahmen und dem äußeren Rahmen ermöglichen, wobei der Steg hinter dem Modul auf dessen Umfang zwischen dem Modul und dem inneren Rahmen angeordnet ist, und das Montieren eines optischen Stapels (200) mit mindestens einem optischen Film auf der Rückseite des Polarisators (4), wobei mindestens eine der aneinander anliegenden Flächen des Films und des Polarisators eine Oberflächenrauheit aufweist, die nicht gleich Null ist, wobei der in Bezug auf den Steg (12) zurückgesetzte optische Stapel einen Raum begrenzt, wodurch ein Klebstoffstrang (100) auf die Kante des Stapels auf dessen gesamtem Umfang angebracht werden kann, wobei der Klebstoffstrang die Abdichtung der Glatt-Rau-Schnittstellen zwischen dem Polarisator und dem optischen Film sicherstellt und den Stapel mit dem Modul fest verbindet.

## Claims

1. LCD screen comprising an LCD module mounted in a mechanical structure (10),
said module being clamped on its edges between an inner frame (10b) and an outer frame (10a) of said mechanical structure, the LCD module comprising a polarizer (4) on the rear face of a plate (1) of the module and an optical stack on the rear face of the polarizer (4) comprising at least one optical film (200) plated against said polarizer, the one at least of the faces of said film and of the polarizer plated against each other being of non-null surface roughness, **characterised in that** it comprises a spacer (12), arranged at the rear of the module, on its edges, between the module and the inner frame of the mechanical structure, said spacer having dimensions and a rigidity enabling a clamping without overhang of the module and **in that** the optical stack (4) is offset from the spacer (12), delimiting between the spacer and the optical stack a space in which a bead of glue (100) is arranged on the section of the stack on all its edges, said glue bead providing the sealing of the smooth/rough interfaces between the polarizer and the optical film and integrating the stacking with the module.

2. LCD screen according to claim 1, wherein said stacking comprises two or more optical films plated against each other, such that at each interface between two optical films (200, 300), the one at least has one face with non-null surface roughness, and the bead has a sufficient thickness to be able to cover the different interfaces on the section of the stack.

3. LCD screen according to claim 1 or 2, wherein at least one optical film of the stack is a diffuser.

4. LCD screen according to any one of claims 1 to 3, wherein said polarizer (4) is a polarizer with an additional optical function integrated by lamination of an optical film.

5. LCD screen according to any one of claims 1 to 4, wherein the polarizer (4) and the optical stack have noticeably the same dimensions, offset in relation to the edge of the module and the spacer that is arranged against the rear face of the plate (1) of the module, and said glue bead (100) covers the section of the assembly of the polarizer and the optical stack, in the space delimited between the spacer (12) and the polarizer and the optical stack assembly.

6. LCD screen according to any one of claims 1 to 4, wherein the polarizer is of the hardened type for storage in humid heat, and noticeably covers the surface of the plate (1) of the module, and the spacer (12) is arranged against the rear face of said polarizer.

7. LCD screen according to any one of the preceding claims, further comprising a glass slab integrating a surface heater, said slab being plated against the film or the last film of the optical stack, the face of the optical film plated against the glass slab being of non-null surface roughness.

8. LCD screen according to any one of the claims 1 to 7, wherein the spacer (12) is a continuous part surrounding the module.

9. LCD screen according to any one of the claims 1 to 7, wherein the spacer (12) is formed by four strips, one per side of the module.

10. LCD screen according to any one of the claims 1 to 9, wherein the spacer and said inner frame (10.b) are a single part.

11. LCD screen according to any one of the claims 1 to 9, wherein said inner frame rests on the spacer (12).

12. LCD screen according to any one of the preceding claims, wherein the spacer (12) is integrally attached to said module, by an adhesive.

13. Assembly method of an LCD screen, comprising the formation of an LCD module comprising a polarizer (4) on the rear face of a plate (1) and the assembly of the module in a mechanical structure (10), the module being clamped on its edges between an outer frame (10a) and an inner frame 10(b) of the mechanical structure, **characterised in that** the formation of a spacer (10), having sides and a rigidity enabling a clamping without overhang of the module between said inner frame and outer frame, the spacer being arranged at the rear of the module, on its edges, between the module and the inner frame, and the assembly on the rear face of the polarizer (4) of an optical stack (200) comprising at least one optical film, the one at least of the faces of said file and the polarizer plated against each other being of non-null surface roughness, with the optical stack offset from the spacer (12) delimiting a space enabling a feed of a bead of glue (100) on the section of the stack on all its edges, said glue bead providing the sealing of the smooth/rough interfaces between the polarizer and the optical film and integrating the stacking with the module.
